# EUROPÄISCHE PATENTSCHRIFT

(11) **EP 2 329 555 B1**
(45) Veröffentlichungstag und Bekanntmachung des Hinweises auf die Patenterteilung: **13.06.2012**
(21) Anmeldenummer: 09778437.5
(22) Anmeldetag: 09.09.2009
(51) Int. Cl.: H01M 8/04, F02B 37/00, F01D 15/00, F02C 6/10

(54) **LUFTVERSORGUNGSEINRICHTUNG FÜR EINEN BRENNSTOFFZELLENSTAPEL, BRENNSTOFFZELLENSYSTEM UND VERFAHREN ZUM BETREIBEN EINER LUFTVERSORGUNGSEINRICHTUNG**
AIR SUPPLY UNIT FOR A FUEL CELL STACK, FUEL CELL SYSTEM AND METHOD FOR OPERATING AN AIR SUPPLY UNIT
DISPOSITIF D ALIMENTATION EN AIR DESTINÉ À UN EMPILEMENT DE PILES À COMBUSTIBLE, SYSTÈME DE PILES À COMBUSTIBLE ET PROCÉDÉ PERMETTANT DE FAIRE FONCTIONNER UN DISPOSITIF D ALIMENTATION EN AIR

(30) Priorität: 30.09.2008 DE 102008049689
(43) Veröffentlichungstag der Anmeldung: 08.06.2011
(73) Patentinhaber: Daimler AG, 70327 Stuttgart (DE)
(72) Erfinder: SUMSER, Siegfried, 70327 Stuttgart (DE); STUTE, Manfred, 73730 Esslingen (DE)
(74) Vertreter: JENSEN & SON
(86) Internationale Anmeldenummer: PCT/EP2009/006551
(87) Internationale Veröffentlichungsnummer: WO 2010/037467

(56) Entgegenhaltungen:
- EP-A- 1 717 892
- DE-A1- 10 322 296
- DE-A1-102004 062 091
- DE-A1-102008 018 863
- US-A1- 2006 010 866

## Beschreibung

Die Erfindung betrifft eine Luftversorgungseinrichtung für einen Brennstoffzellenstapel, mit einem Verdichter zum Verdichten von dem Brennstoffzellenstapel über eine Zuleitung zuführbarer Zuluft, mit einer Turbine, welcher zum Antreiben des Verdichters Abluft des Brennstoffzellenstapels zuführbar ist, und mit einer mit einem Brennstoff beaufschlagbaren Brennkammer, wobei die Turbine mit Abgas der Brennkammer beaufschlagbar ist. Des Weiteren betrifft die Erfindung ein Brennstoffzellensystem mit einer Luftversorgungseinrichtung zum Zuführen von Zuluft zu einem Brennstoffzellenstapel und ein Verfahren zum Betreiben einer Luftversorgungseinrichtung für einen Brennstoffzellenstapel.

Aus dem Kraftfahrzeugbau ist eine Luftversorgungseinrichtung für einen Brennstoffzellenstapel bekannt, welche einen hohen Analogieanteil zu einer Luftversorgungseinrichtung für eine Verbrennungskraftmaschine besitzt. Obwohl der Brennstoffzellenantrieb und der Antrieb mittels der Verbrennungskraftmaschine hinsichtlich ihrer Funktion und ihres Aufbaus unterschiedlich sind, hat sich die auf dem Abgasturbolader basierende Luftversorgungseinrichtung als sehr wirkungsvolle Strömungsmaschine zum Versorgen des Brennstoffzellenstapels mit Zuluft herausgestellt. Der Brennstoffzellenstapel stellt beim Brennstoffzellenantrieb elektrische Energie zum Antreiben des Kraftfahrzeugs bereit.

Bei der Luftversorgungseinrichtung für den Brennstoffzellenstapel, welche einen Verdichter zum Verdichten von dem Brennstoffzellenstapel über eine Zuleitung zuführbarer Zuluft aufweist, ist zum Antreiben des Verdichters eine Turbine vorgesehen, welcher Abluft des Brennstoffzellenstapels zuführbar ist. Zusätzlich ist auch dem Stand der Technik eine mit einem Brennstoff beaufschlagbare Brennkammer bekannt, wobei die Turbine mit Abgas der Brennkammer beaufschlagbar ist. Durch dieses zusätzliche Beaufschlagen der Turbine mit Abgas der Brennkammer ist eine Boosterfunktion bereitgestellt, mittels welcher sich kurzfristig und vergleichsweise rasch eine erhöhte Leistung des Brennstoffzellenstapels erzielen lässt, indem dem Brennstoffzellenstapel ein besonders großer Massenstrom an Zuluft zugeführt wird. Ist zum Antreiben des Verdichters ein elektrisches Antriebsaggregat vorgesehen, so braucht dieses nicht auf eine Leistungsanforderung ausgelegt werden, welche ein Bereitstellen dieses besonders hohen, vom Verdichter geförderten Massenstroms ermöglicht.

Das Document DE 103 22 296A1 offenbart eine Luftversorgeinheit ungseinrichtung für ein ungseinrichtung für ein Brennstoffezellensystem nach dem Stand der Technik.

Aufgabe der vorliegenden Erfindung ist es, eine Luftversorgungseinrichtung und ein Verfahren der eingangs genannten Art zu schaffen, welche, bzw. welches ein besonders wirkungsvolles Antreiben der Turbine ermöglicht.

Bei der erfindungsgemäßen Versorgungseinrichtung für einen Brennstoffzellenstapel, mit einem Verdichter zum Verdichten von dem Brennstoffzellenstapel über eine Zuleitung zuführbarer Zuluft, mit einer Turbine, welcher zum Antreiben des Verdichters Abluft des Brennstoffzellenstapels zuführbar ist, und mit einer mit einem Brennstoff beaufschlagbaren Brennkammer, wobei die Turbine mit Abgas der Brennkammer beaufschlagbar ist, weist die Zuleitung eine Abzweigleitung auf, mittels welcher der Brennkammer verdichtete Zuluft zuführbar ist.

Der Erfindung liegt die Erkenntnis zugrunde, dass ein besonders wirkungsvolles Antreiben der Turbine ermöglicht ist, wenn der Brennkammer Zuluft mit einem vergleichsweise hohen Sauerstoffgehalt je Volumeneinheit zugeführt wird. Wird der Brennkammer also verdichtete Zuluft als Oxidationsmittel zugeführt, so geht die nach Zufuhr des Brennstoffs und Zünden erfolgende Verbrennung in Form einer Radikalkettenreaktion mit einer besonders hohen Energiefreisetzung einher. Das besonders energiereiche Abgas der Brennkammer sorgt für ein besonders wirkungsvolles Antreiben der Turbine.

Die durch das Beaufschlagen der Turbine mit Abgas der Brennkammer bewirkte höhere Leistung der Turbine führt zu einer verstärkten Förderung von Zuluft zu dem Brennstoffzellenstapel mittels des Verdichters, so dass eine Steigerung der Leistung des Brennstoffzellenstapels ermöglicht ist. Beim Nutzen dieser, insbesondere kurzfristig einsetzbaren, Boosterfunktion wird der Hauptanteil der von dem Verdichter verdichteten Zuluft dem Brennstoffzellenstapel zugeführt und zur Stromerzeugung genutzt. Der an der Abzweigleitung abgezweigte Teilstrom der Zuluft bewirkt hingegen mittels der Verbrennung in der Brennkammer ein Beaufschlagen der Gasturbine mit energiereichem Abgas und so eine Steigerung der Leistung des Brennstoffzellenstapels.

Das Umgehen des Brennstoffzellenstapels mit dem Teilstrom der Zuluft über die Abzweigleitung ist auch dann durchführbar, wenn der Brennkammer kein zu zündender Brennstoff zugeführt wird, also keine Verbrennung in der Brennkammer erfolgt. Hierbei stellt dann der durch die Abzweigleitung bereitgestellte Bypass einen zusätzlich zu dem Brennstoffzellenstapel gegebenen durchströmbaren Querschnitt bereit. Bei einem Betreiben des Verdichters nahe seiner Pumpgrenze kann hierbei bei gegebenem Druckverhältnis ein größerer Massenstrom von dem Verdichter bereitgestellt werden und so ein Pumpen des Verdichters vermieden werden. Zum Aufrechterhalten des gegebenen Druckverhältnisses bei dem größeren Massenstrom ist hierbei mittels eines von der Turbine verschiedenen Antriebsaggregats, etwa mittels eines Elektromotors, dem Verdichter die notwendige Leistung bereitzustellen.

Vorstellbar ist es, der Brennkammer zumindest ergänzend die Abluft des Brennstoffzellenstapels zuzuführen, um so in der Abluft des Brennstoffzellenstapels vorhandenen Restsauerstoff für die Verbrennung zu nutzen.

In einer vorteilhaften Ausgestaltung der Erfindung ist die Turbine zweiflutig ausgebildet, wobei ein erster Spiralkanal mit Abgas der Brennkammer und ein zweiter Spiralkanal mit Abluft des Brennstoffzellenstapels beaufschlagbar ist. Die vergleichsweise kalte Abluft der Brennstoffzelle ist somit der gleichen Turbine wie das vergleichsweise heiße Abgas der Brennkammer zuführbar. Während die Abluft des Brennstoffzellenstapels Temperaturen von 100 °C nicht wesentlich übersteigt, können mittels der Brennkammer Temperaturen des Abgases der Brennkammer von beispielsweise 600 bis 700 °C erreicht werden. Die der zweiflutigen Turbine zugeführten Abgas bzw. Abluftströme weisen somit unterschiedliche Zusammensetzung, unterschiedliche Eintrittstemperaturen und unterschiedliche Eintrittsdrücke auf.

Der erste Spiralkanal und der zweite Spiralkanal können so ausgelegt sein, dass sich das Abgas der Brennkammer und die Abluft des Brennstoffzellenstapels erst direkt stromaufwärts eines Turbinenrads der Turbine treffen. Ebenso ist es vorstellbar, eine Trennung der Ströme bis in den Bereich des Turbinenrades aufrecht zu erhalten.

Betrachtet man einen für den ersten Spiralkanal gegebenen Brennkammer-Durchsatzparameter, welcher sich als Massenstrom m_{BK} durch den ersten Spiralkanal multipliziert mit der Wurzel der Temperatur T_{BK} des Abgases und dividiert durch den Druck P_{BK} des Abgases der Brennkammer berechnen lässt, so kann dieser aufgrund der hohen Temperatur T_{BK} des Abgases und dem vergleichsweise niedrigen Massenstrom m_{BK} eine vergleichbare Größenordnung aufweisen wie ein Brennstoffzellenstapel-Durchsatzparameter. Der Brennstoffzellenstapel-Durchsatzparameter, welcher sich als Massenstrom m_{BZ} der Abluft des Brennstoffzellenstapels multipliziert mit der Wurzel der Temperatur T_{BZ} der Abluft und dividiert durch den Druck P_{BZ} berechnen lässt, charakterisiert hierbei den Durchsatz durch den zweiten Spiralkanal. Der Brennkammer-Durchsatzparameter kann einen Wert von 1 aufweisen. Bei dem eine vergleichbare Größenordnung aufweisenden Brennstoffzellenstapel-Durchsatzparameter liegt ein vergleichsweise großer Massenstrom m_{BZ} bei vergleichsweise niedriger Temperatur vor.

In einer weiteren vorteilhaften Ausgestaltung der Erfindung ist ein durchströmbarer Querschnitt des zweiten Spiralkanals größer als ein durchströmbarer Querschnitt des ersten Spiralkanals. Die hierbei gegebene zweiflutige und asymmetrische Turbine ist beispielsweise dann zum Antreiben des Verdichters besonders geeignet, wenn der Brennkammer-Durchsatzparameter größenordnungsmäßig den Wert 1 und der Brennstoffzellenstapel-Durchsatzparameter größenordnungsmäßig den Wert von 1,5 aufweist. Dadurch ist ein besonders hoher Wirkungsgrad der Turbine sowohl im Normalbetrieb als auch im Boosterbetrieb, wenn die Turbine mit Abgas der Brennkammer beaufschlagt wird, ermöglicht.

Als weiter vorteilhaft hat es sich gezeigt, wenn der zweite Spiralkanal näher an einem Lager einer ein Turbinenrad der Turbine und ein Verdichterrad des Verdichters tragenden Welle angeordnet ist als der erste Spiralkanal. Hierbei wirkt dann der zweite Spiralkanal, durch welchen die vergleichsweise kühle Abluft des Brennstoffzellenstapels strömt, als thermischer Puffer, welcher zu einer verringerten thermischen Belastung des Lagers der Welle führt.

In weiterer vorteilhafter Ausgestaltung der Erfindung ist der zweite Spiralkanal näher an einem elektrischen Antriebsaggregat zum Antreiben des Verdichters angeordnet als der erste Spiralkanal. Hier wirkt der zweite Spiralkanal als thermischer Puffer hinsichtlich einer thermischen Belastung des elektrischen Antriebsaggregats.

In vorteilhafter Weise ist stromaufwärts des Verdichters ein Niederdruckverdichter angeordnet, wobei zum Antreiben des Niederdrucksverdichters ein elektrisches Antriebsaggregat vorgesehen ist. Durch eine mittels zweier hintereinandergeschalteter Verdichter erreichbare zweistufige Kompression sind die Wirkungsgrade des Verdichters und des Niederdruckverdichters entsprechend günstig auslegbar.

Von besonderen Vorteil ist hierbei, wenn der stromabwärts des elektrisch antreibbaren Niederdruckverdichters angeordnete Verdichter kein elektrisches Antriebsaggregat aufweist, also analog einem an sich bekannten Turbolader ausgebildet ist. Durch ein Verzichten auf Versehen des Verdichters mit einem elektrischen Antriebsaggregat braucht dieses nicht gesondert vor der thermischen Belastung durch das Abgas der Brennkammer geschützt zu werden. Betriebsbereiche des bei dieser Anordnung als Hochdruckverdichters ausgebildeten Verdichters sind somit im Wesentlichen abhängig von den Energien, welche durch das Abgas der Brennkammer und/oder durch die Abluft des Brennstoffzellenstapels der Turbine zur Verfügung gestellt werden. Durch zusätzliches Antreiben des Niederdruckverdichters mittels des elektrischen Antriebsaggregats ist ein besonders breiter Leistungsbereich des Brennstoffzellenstapels mittels der zweistufigen Kompression erreichbar.

Ergänzend oder alternativ kann stromabwärts des Verdichters ein Hochdruckverdichter angeordnet sein, wobei zum Antreiben des Hochdruckverdichters ein elektrisches Antriebsaggregat vorgesehen ist. Auch hier ist das elektrische Antriebsaggregat von dem Verdichter thermisch entkoppelt, wobei die den Verdichter antreibende Turbine mit dem heißen Abgas der Brennkammer beaufschlagbar ist. Ist der analog eines bekannten Turboladers ausgebildete, also keinen elektrischen Antrieb aufweisende Verdichter stromaufwärts des Hochdruckverdichters angeordnet, so kann der Verdichter auf vergleichsweise niedrige spezifische Drehzahlen, beispielsweise von weniger als 100.000 Umdrehungen pro Minute, ausgelegt werden. Bei einer Auslegung auf derartige niedrige spezifische Drehzahlen sind entsprechend vergleichsweise große Durchmessern des Verdichterrades und des Turbinenrades einsetzbar. Dadurch sind weniger aufwendige Lager für die Welle einsetzbar, welche das Turbinenrad und das Verdichterrad trägt.

Vorstellbar ist jedoch auch bei einer zweistufigen Kompression eine Hintereinanderschaltung zweier Turbinen, welche jeweils den Niederdruckverdichter und den Hochdruckverdichter antreiben. Hierbei können beide Verdichter zusätzlich durch ein elektrisches Antriebsaggregat antreibbar sein.

Ist stromabwärts des Verdichters ein Hochdruckverdichter angeordnet, so ist gemäß einer weiteren vorteilhaften Ausgestaltung der Erfindung die Abzweigleitung stromabwärts des Hochdruckverdichters in der Zuleitung angeordnet. Dadurch ist der Brennkammer besonders hoch verdichtete Zuluft zuführbar.

In einer weiteren vorteilhaften Ausgestaltung der Erfindung ist an einer Anschlussstelle der Abzweigleitung an die Zuleitung eine Dosiereinrichtung zum Einstellen eines der Brennkammer zuführbaren Zuluftstroms angeordnet. Die Dosiereinrichtung ermöglicht bevorzugt ebenfalls ein vollständiges Absperren der Abzweigleitung. Dadurch ist der Teilstrom der Zuluft, welcher der Brennkammer zuführbar ist, in Abhängigkeit von der gewünschten Leistung des Brennstoffzellenstapels einstellbar.

Von Vorteil ist es weiterhin, wenn die Turbine eine Drosseleinrichtung zum Drosseln und/oder Absperren zumindest des ersten Spiralkanals aufweist. In diesem Fall kann die an der Anschlussstelle der Abzweigleitung an die Zuleitung angeordnete Dosiereinrichtung entfallen, da die Dosierung der über die Abzweigleitung an dem Brennstoffzellenstapel vorbeigeleiteten Menge der Zuluft mittels der Drosseleinrichtung erfolgen kann, insbesondere, wenn diese ein Absperren des ersten Spiralkanals zulässt. Als Drosseleinrichtung kann beispielsweise ein Varioschieber vorgesehen sein, mittels welchem der erste Spiralkanal an einem Eintrittsbereich zum Turbinenrad versperrbar ist. Mittels des Varioschiebers kann hierbei bevorzugt eine Schaufelhöhe von Schaufeln eines Turbinenleitgitters verändert werden. Des Weiteren ermöglicht eine solche Drosseleinrichtung ein besonders feines Einstellen der den ersten Spiralkanal beaufschlagenden Abgasmenge der Brennkammer.

Die Drosseleinrichtung kann auch zum Drosseln und/oder Absperren des ersten Spiralkanals und des zweiten Spiralkanals ausgebildet sein. Damit ist für den ersten Spiralkanal und den zweiten Spiralkanal eine Variabilität gegeben.

In einer weiteren vorteilhaften Weiterbildung der Erfindung ist stromaufwärts der Turbine eine Dosiereinrichtung angeordnet, mittels welcher das Abgas der Brennkammer gemeinsam mit der Abluft des Brennstoffzellenstapels dem ersten Spiralkanal und/oder dem zweiten Spiralkanal zuführbar ist. Die Dosiereinrichtung kann einen Drehschieber umfassen, welcher auch ein getrenntes Beaufschlagen des ersten und des zweiten Spiralkanals mit dem Abgas der Brennkammer bzw. der Abluft des Brennstoffzellenstapels ermöglicht.

Je nach Stellung des Drehschiebers kann das gesamte Abgas der Brennkammer gemeinsam mit der Abluft des Brennstoffzellenstapels gemischt dem ersten Spiralkanal und dem zweiten Spiralkanal zugeführt werden. Eine solche Dosiereinrichtung ermöglicht ein Anpassen des Beaufschlagens der Turbine mit der Abluft und/oder dem Abgas mit hohem Wirkungsgrad in Abhängigkeit vom jeweils vorliegenden Massenstrom des Abgases bzw. der Abluft. Mittels der Dosiereinrichtung ist auf besonders einfache und kostengünstige Art und Weise ein variables Beaufschlagen einer eine nicht variable Geometrie aufweisen, zweiflutigen Turbine ermöglicht.

Von Vorteil ist weiterhin, wenn die Turbine als, insbesondere variable, Zwillingsstromturbine oder Segmentturbine ausgebildet ist. Bei der Zwillingsstromturbine kann die Variabilität auf besonders einfache und kostengünstige Art und Weise mittels der dieser vorgeschalteten Dosiereinrichtung erreicht werden. Jedoch sind auch turbinenseitig variable, beispielsweise einen Axialschieber aufweisende, Zwillingsstromturbinen einsetzbar. Demgegenüber kann bei der Segmentturbine ein Verändern des Durchsatzverhaltens mittels eines drehbaren Zungenrings oder dergleichen einstellbar sein, wobei ein Übertritt von Abgas bzw. Abluft in den zweiten bzw. ersten Spiralkanal herbeiführbar sein kann. Eine derartige Segmentturbine ist vom Aufbau her besonders einfach und kostengünstig. Auch eine Segmentturbine mit fester, nicht variabler Geometrie ermöglicht jedoch ein wirkungsvolles Antreiben des Verdichters mittels der Boosterfunktion.

Von Vorteil ist es weiterhin, wenn zum Bevorraten von Brennstoff für die Brennkammer und den Brennstoffzellenstapel ein gemeinsames Vorratsbehältnis vorgesehen ist. Dadurch ist eine Komplexität der Einrichtung reduziert. Bei dem Brennstoff kann es sich insbesondere um Wasserstoffgas handeln.

In weiterer Ausgestaltung, der Erfindung kann stromabwärts der Turbine eine Abgasnachbehandlungseinrichtung angeordnet sein. Dies ist insbesondere dann von Vorteil, wenn beim Verbrennen des Brennstoffs unerwünschte Abgase, insbesondere Stickoxide, in unerwünscht hohen Konzentrationen entstehen. Die Abgasnachbehandlungseinrichtung kann einen einfachen Denox-Katalysator oder dergleichen umfassen.

Gemäß einem weiteren Aspekt der Erfindung wird die oben genannte Aufgabe gelöst durch ein Brennstoffzellensystem mit einer erfindungsgemäßen Luftversorgungseinrichtung.

Ein besonders wirkungsvolles Antreiben der Turbine ist des Weiteren ermöglicht durch ein Verfahren zum Betreiben einer Luftversorgungseinrichtung für einen Brennstoffzellenstapel, bei welchem ein Verdichter dem Brennstoffzellenstapel über eine Zuleitung zugeführte Zuluft verdichtet, bei welchem einer den Verdichter antreibenden Turbine Abluft des Brennstoffzellenstapels zugeführt wird, und bei welchem eine Brennkammer mit einem Brennstoff beaufschlagt wird, wobei die Turbine mit Abgas der Brennkammer beaufschlagt wird, und wobei der Brennkammer verdichtete Zuluft zugeführt wird, welche über eine Abzweigleitung von der Zuleitung abgezweigt wird.

Die für die erfindungsgemäße Luftversorgungseinrichtung beschriebenen bevorzugten Ausführungsformen und Vorteile gelten auch für das erfindungsgemäße Verfahren zum Betreiben einer Luftversorgungseinrichtung für einen Brennstoffzellenstapel.

Weitere Vorteile, Merkmale und Einzelheiten der Erfindung ergeben sich aus der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: eine erste Ausführungsform einer Luftversorgungseinrichtung für einen Brennstoffzellenstapel, welcher mit einem Antriebsaggregat eines Kraftfahrzeugs verbunden ist, wobei einer zweiflutigen Turbine Abluft des Brennstoffzellenstapels und Abgas einer Brennkammer zuführbar ist;
- Fig. 2: eine Schnittansicht einer zweiflutigen Zwillingsstromturbine der Luftversorgungseinrichtung gemäß Fig. 1;
- Fig. 3: eine zweite Ausführungsform einer Luftversorgungseinrichtung zum Versorgen des Brennstoffzellenstapels mit Zuluft;
- Fig. 4: eine Schnittansicht einer zweiflutigen Segmentturbine der Luftversorgungseinrichtung gemäß Fig. 3;
- Fig. 5: eine dritte Ausführungsform einer Luftversorgungsseinrichtung zum Zuführen von Zuluft zu dem Brennstoffzellenstapel;
- Fig. 6: eine Schnittansicht einer variablen zweiflutigen Turbine der Luftversorgungseinrichtung gemäß Fig. 5;
- Fig. 7: eine vierte Ausführungsform einer Luftversorgungseinrichtung zu Zuführen von Zuluft zu dem Brennstoffzellenstapel, wobei stromaufwärts der zweiflutigen Turbine eine Dosiereinrichtung angeordnet ist;
- Fig. 8: eine Schnittansicht der Dosiereinrichtung gemäß Fig. 7 in einer ersten Dosierstellung; und
- Fig. 9: eine Schnittansicht der Dosiereinrichtung gemäß Fig. 7 in einer zweiten Dosierstellung.

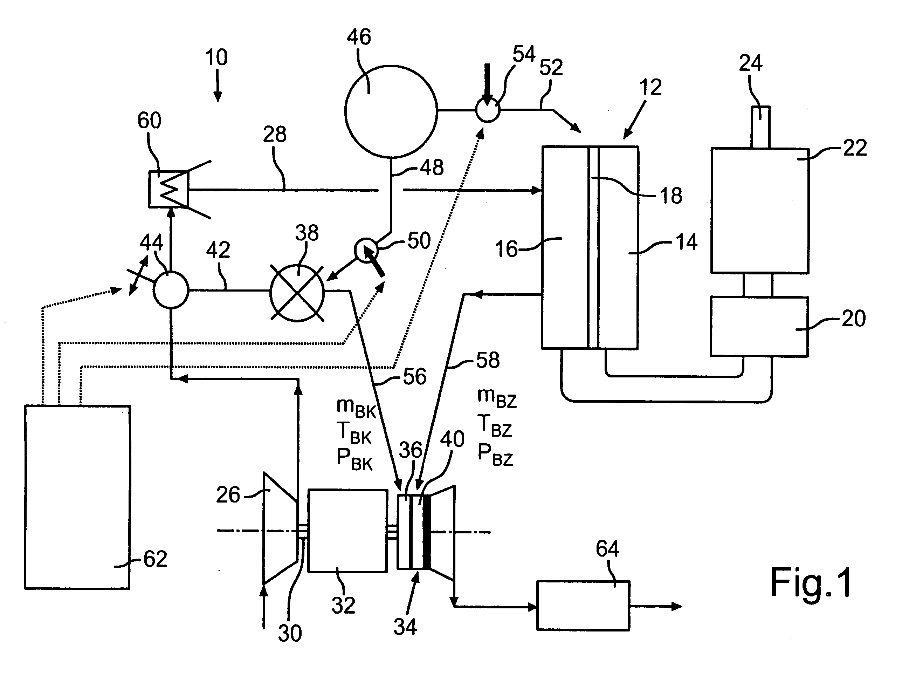

Fig. 1 zeigt schematisch eine erste Ausführungsform einer Luftversorgungseinrichtung 10 zum Versorgen eines Brennstoffzellenstapels 12 mit Zuluft. Der Brennstoffzellenstapel 12 weist in an sich bekannter Art und Weise eine Vielzahl von einzelnen Brennstoffzellen auf, wobei ein Anodenraum 14 von einem Kathodenraum 16 mittels einer Membran 18 getrennt ist. Der Brennstoffzellenstapel 12 ist elektrisch leitend mit einem Akkumulator 20 zum Speichern der mittels des Brennstoffzellenstapels 12 erzeugten elektrischen Energie verbunden. Der Akkumulator 20 ist seinerseits mit einem elektrischen Antriebsaggregat 22 elektrisch leitend verbunden, mittels welchem ein Antriebsstrang 24 eines vorliegend nicht näher gezeigten Kraftfahrzeugs mit Bewegungsenergie beaufschlagbar ist.

Die Luftversorgungseinrichtung 10 umfasst einen Verdichter 26, mittels welchem dem Brennstoffzellenstapel 12 über eine Zuleitung 28 verdichtete Zuluft zuführbar ist. Zum Antreiben einer Welle 30 des Verdichters 26 ist vorliegend ein als Elektromotor 32 ausgebildetes elektrisches Antriebsaggregat vorgesehen. Des Weiteren ist an der Welle 30 des Verdichters 26 eine zweiflutige Turbine 34 angeordnet, mittels welcher ein Verdichterrad des Verdichters 26 antreibbar ist. Hierfür ist einem ersten Spiralkanal 36 der Turbine 34 Abgas einer Brennkammer 38 zuführbar. Des Weiteren ist einem zweiten Spiralkanal 40 der Turbine 34 Abluft des Brennstoffzellenstapels 12 zuführbar.

Die von dem Verdichter 26 zu dem Brennstoffzellenstapel 12 führende Zuleitung 28 weist eine Abzweigleitung 42 auf, mittels welcher der Brennkammer 38 von dem Verdichter 26 verdichtete Zuluft zuführbar ist. An einer Anschlussstelle der Abzweigleitung 42 an die Zuleitung 28 ist bei der Ausführungsform gemäß Fig. 1 eine Dosiereinrichtung 44 zum Einstellen eines der Brennkammer 38 zuführbaren Teil-Zuluftstroms angeordnet.

Zum Bevorraten von Brennstoff für die Brennkammer 38 ist ein Vorratsbehältnis 46 vorgesehen, in welchem als Brennstoff Wasserstoffgas gespeichert ist. Von diesem Vorratsbehältnis 46 führt eine erste Leitung 48 zu der Brennkammer 38, wobei eine Menge des der Brennkammer 38 zuführbaren Brennstoffs mittels eines ersten Ventils 50 einstellbar ist. Mittels einer zweiten Leitung 52, welche ein zweites Ventil 54 aufweist, ist dem Brennstoffzellenstapel 12 Brennstoff aus dem Vorratsbehältnis 46 zuführbar.

Ein Zuführen von mittels des Verdichters 26 verdichteter Zuluft in die Brennkammer 38 und ein Zuführen von Brennstoff aus dem Vorratsbehältnis 46 zu der Brennkammer 38 erfolgt dann, wenn eine erhöhte Leistung des Brennstoffzellenstapels 12 angefordert wird. Hierbei bewirkt ein Beaufschlagen des ersten Spiralkanals 36 der Turbine 34 mit dem Abgas der Brennkammer 38 zusätzlich zu dem Beaufschlagen des zweiten Spiralkanals 40 mit der Abluft des Brennstoffzellenstapels 12 eine besonders hohe Leistung der Turbine 34. Folglich stellt der mittels der Turbine 34 angetriebene Verdichter 26 eine besonders große Menge an verdichteter Zuluft dem Brennstoffzellenstapel 12 zur Verfügung, wodurch eine besonders hohe Leistung des Brennstoffzellenstapels 12 abrufbar ist. Dadurch, dass der Brennkammer 38 verdichtete Zuluft zugeführt wird, ist eine besonders energiereiche Verbrennung des Brennstoffs in der Brennkammer 38 ermöglicht und so die Turbine 34 über das dem ersten Spiralkanal 36 zugeführte Abgas der Brennkammer 38 besonders wirkungsvoll antreibbar.

In einem dem ersten Spiralkanal 36 das Abgas der Brennkammer 38 zuführenden Abgasstrang 56 liegt Abgas vor, welches durch einen Brennkammer-Durchsatzparameter charakterisiert ist. In den Brennkammer-Durchsatzparameter fließen ein Massenstrom m_{BK} des Abgases, eine Temperatur T_{BK} des Abgases und ein Druck P_{BK} des Abgases ein. In analoger Weise ist ein von dem Brennstoffzellenstapel 12 zu dem zweiten Spiralkanal 40 führender Abluftstrang 58 charakterisierbar durch einen Brennstoffzellenstapel-Durchsatzparameter. Diesen kennzeichnen der Massenstrom m_{BZ} der Abluft, deren Temperatur T_{BZ} und deren Druck P_{BZ}.

Stromabwärts der Abzweigleitung 42 weist die Zuleitung 28 zu dem Brennstoffzellenstapel 12 einen Ladeluftkühler 60 auf. Des Weiteren zeigt die Luftversorgungseinrichtung der Ausführungsform gemäß Fig. 1 eine Regelungseinrichtung 62, mittels welcher die Dosiereinrichtung 44 und somit der dem Brennstoffzellenstapel 12 zuführbare Hauptstrom der Zuluft und die Ventile 50, 54 sowie die Teilmassendosierung des der Brennkammer 38 zuführbaren Zuluftstroms regelbar sind. Bei Freigabe eines Teilluftstroms zu der Brennkammer 38 über die Abzweigleitung 42 und Zudosierung von Brennstoff in die Brennkammer 38 expandiert das in der Brennkammer auf 600 bis 700 °C aufgeheizte Abgas nach Zuführen des Abgases zu einem Turbinenrad aus dem ersten Spiralkanal 36 unter Abgabe von mechanischer Arbeit. In analoger Weise expandiert die Abluft des Brennstoffzellenstapels 12 durch Zuführen der Abluft zu dem Turbinenrad der Turbine 34 über den zweiten Spiralkanal 40. Der Turbine 34 ist stromabwärts eine Abgasnachbehandlungseinrichtung 64 nachgeschaltet.

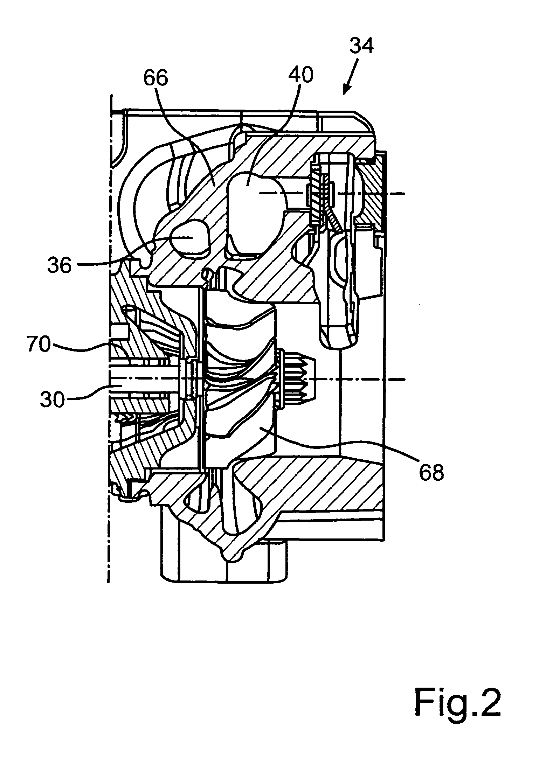

Fig. 2 zeigt in einer Schnittansicht die zweiflutige Turbine 34 der Luftversorgungseinrichtung 10 gemäß Fig. 1. Ein Turbinengehäuse 66 weist den ersten Spiralkanal 36 und den zweiten Spiralkanal 40 auf. Hierbei ist ein durchströmbarer Querschnitt des zweiten Spiralkanals 40 größer als ein durchströmbarer Querschnitt des ersten Spiralkanals 36. Bei der Turbine 34 handelt es sich somit um eine asymmetrische Zwillingsstromturbine, deren Turbinenrad 68 von der Welle 30 getragen ist. In einer alternativen, bevorzugten Ausführungsform der asymmetrischen Zwillingsstromturbine kann der das Abgas der Brennkammer 38 führende erste Spiralkanal 36 weiter von einem Lager 70 der Welle 30 beabstandet sein als der zweite Spiralkanal 40. Dadurch dient der die mit nicht wesentlich mehr als 100 °C vergleichsweise kalte Abluft des Brennstoffzellenstapels 12 führende zweite Spiralkanal 40 als thermischer Puffer gegenüber dem Lager 70 und dem Elektromotor 32.

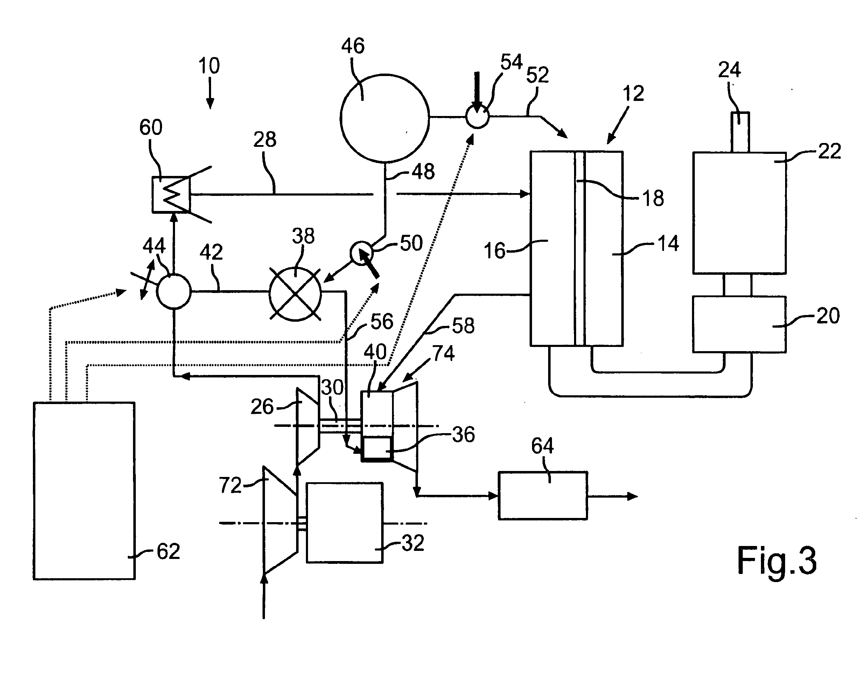

Fig. 3 zeigt eine zweite Ausführungsform der Luftversorgungseinrichtung 10, bei welcher dem Brennstoffzellenstapel 12 zweistufig verdichtete Zuluft zuführbar ist. Hierbei ist dem Verdichter 26 ein Niederdruckverdichter 72 vorgeschaltet, welcher mittels des Elektromotors 32 antreibbar ist. Demgegenüber ist die Welle 30 des Verdichters 26 nicht durch einen Elektromotor angetrieben, sondern lediglich über eine zweiflutige Turbine 74, welche als asymmetrische Segmentturbine ausgebildet ist. In analoger Weise zu der in Fig. 1 gezeigten Zwillingsstromturbine weist die Turbine 74 gemäß Fig. 3 den ersten Spiralkanal 36 und den zweiten Spiralkanal 40 auf. Hierbei ist der erste Spiralkanal 36 mit dem Abgas der Brennkammer 38 und der zweite Spiralkanal 40 mit der Abluft des Brennstoffzellenstapels 12 beaufschlagbar.

Dem Verdichter 26, welcher vorliegend als besonders wirkungsgradgünstig betreibbarer Hochdruckverdichter fungiert, stehen zum Antreiben die Energien des Abgases der Brennkammer 38 und der Abluft des Brennstoffzellenstapels 12 zur Verfügung. Im Übrigen entspricht die Luftversorgungseinrichtung 10 der in Fig. 1 gezeigten Ausführungsform.

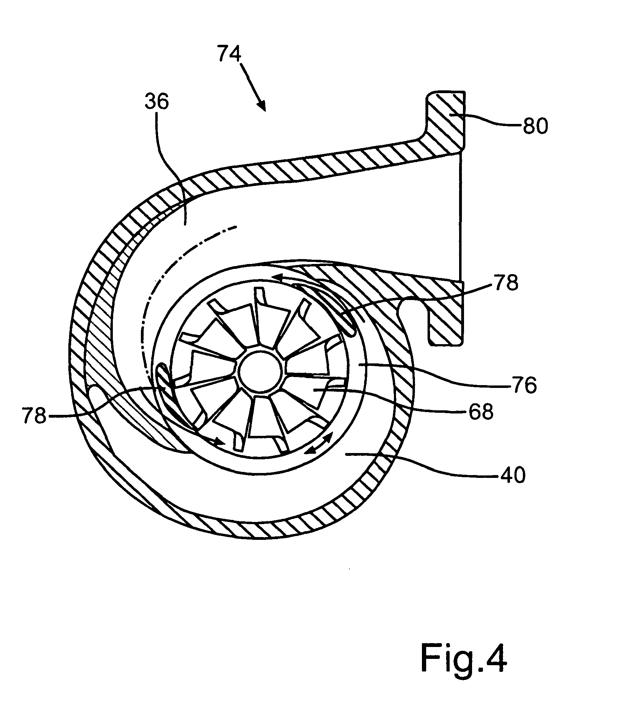

Fig. 4 zeigt die zweiflutige, asymmetrische Segmentturbine 74 gemäß Fig. 3 in einer geschnittenen Seitenansicht. Die Turbine 74 ist vorliegend als variable, asymmetrische Segmentturbine ausgebildet. Zum Variieren der über den ersten Spiralkanal 36 bzw. über den zweiten Spiralkanal 30 dem Turbinenrad 68 zuführbaren Menge an Abgas bzw. Abluft ist vorliegend ein drehbarer Zungenschieber 76 vorgesehen. In der in Fig. 4 gezeigten Position des Zungenschiebers 76 ermöglichen dessen Zungen 78 ein Übertreten des Abgases aus dem ersten Spiralkanal 36 in den zweiten Spiralkanal 40 und von Abluft aus dem zweiten Spiralkanal 40 in den ersten Spiralkanal 36.

Durch Verdrehen des Zungenschiebers 76 gegen den Uhrzeigersinn ermöglichen die Zungen 78 demgegenüber ein getrenntes Beaufschlagen der Segmente des Turbinenrades 68 mit Abgas über den ersten Spiralkanal 36 und mit Abluft über den zweiten Spiralkanal 40. Die Turbine 74 weist vorliegend einen Zwillingsflansch 80 auf, über welchen der Abgasstrang 56 und der Abluftstrang 58 parallel zueinander an die Turbine 74 anschließbar sind.

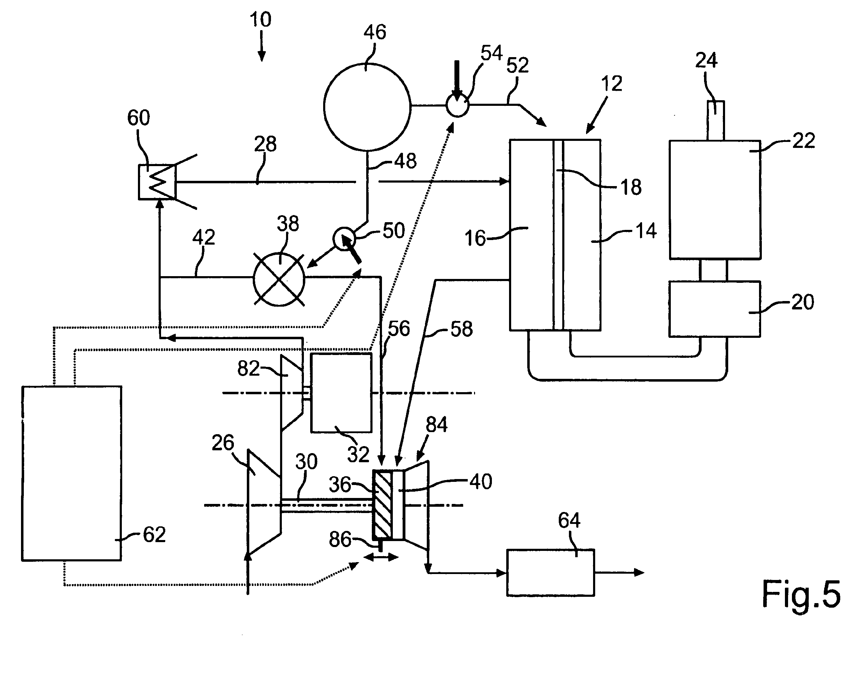

Bei der Ausführungsform der Luftversorgungseinrichtung 10 gemäß Fig. 5, bei welchem ebenfalls dem Brennstoffzellenstapel 12 zweistufig komprimierte Zuluft über die Zuleitung 28 zuführbar ist, ist dem Verdichter 26 ein Hochdruckverdichter 82 nachgeschaltet. Der Elektromotor 32 ist hierbei zum Antreiben des Hochdruckverdichters 82 vorgesehen, wohingegen die Welle 30 des Verdichters 26 kein elektrisches Antriebsaggregat aufweist. Des Weiteren ist eine den Verdichter 26 antreibende Turbine 84 als variable Zwillingsstromturbine ausgebildet. Auch bei dieser Turbine 84 ist dem ersten Spiralkanal 36 das Abgas der Brennkammer 38 und dem zweiten Spiralkanal 40 die Abluft des Brennstoffzellenstapels 12 zuführbar.

Jedoch weist die Turbine 84 eine Drosseleinrichtung 86 zum Drosseln und Absperren des ersten Spiralkanals 36 auf. Dadurch, dass der erste Spiralkanal 36 mittels der Drosseleinrichtung 86 absperrbar ist, kann bei der Ausführungsform der Luftversorgungseinrichtung 10 gemäß Fig. 5 auf die in Fig. 1 und Fig. 3 gezeigte Dosiereinrichtung 44 verzichtet werden. Bei abgesperrten ersten Spiralkanal 36 ist die von der Zuleitung 28 zu der Brennkammer 38 führende Abzweigleitung 42 nicht von der zweistufig verdichteten Zuluft durchströmbar.

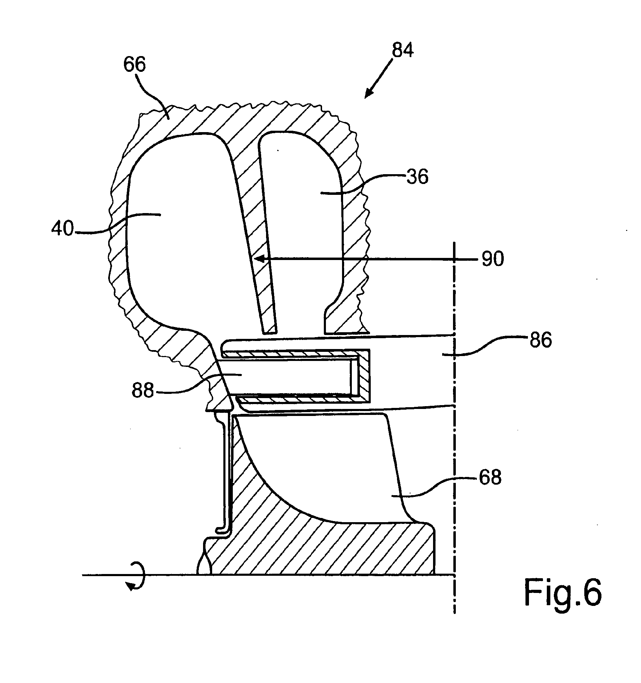

Fig. 6 zeigt die Turbine 84 gemäß Fig. 5 ausschnittsweise in einer Schnittansicht. Als Drosseleinrichtung 86 ist vorliegend ein Varioschieber in dem Turbinengehäuse 66 angeordnet, mittels welchem eine überströmbare Fläche eines Turbinenleitgitters 88 veränderbar ist. Der Varioschieber ist hierbei eine Matrize, mittels welcher die Schaufeln des Turbinenleitgitters 88 unterschiedlich weit überdeckbar sind. In der in Fig. 6 gezeigten Stellung des Varioschiebers ist das Turbinenleitgitter 88 fast vollständig von der Matrize überdeckt. Lediglich ein schmaler Strömungsquerschnitt ist in dieser Stellung von dem Varioschieber freigegeben, so dass ein Übertritt von Abluft des Brennstoffzellenstapels 12 aus dem zweiten Spiralkanal 40 in den das Turbinenrad 68 aufnehmenden Bereich des Turbinengehäuses 66 mit hoher Strömungsgeschwindigkeit ermöglicht ist.

Demgegenüber ist der mit dem Abgas der Brennkammer 38 beaufschlagbare erste Spiralkanal 36, welcher vorliegend einen geringeren durchströmbaren Querschnitt aufweist als der zweite Spiralkanal 40, in der in Fig. 6 gezeigten Stellung des Varioschiebers durch den Varioschieber vollständig verschlossen. Somit ist kein Übertritt von Abgas aus dem ersten Spiralkanal 36 zu dem das Turbinenrad 68 aufnehmenden Bereich des Turbinengehäuses 66 ermöglicht.

Mittels des Varioschieber ist eine Variabilität des Beaufschlagens des Turbinenleitgitters 88 mit Abluft über den zweiten Spiralkanal 40 und mit Abgas über den ersten Spiralkanal 36 ermöglicht. Der Varioschieber ist hierbei über eine Zwischenwandung 90 hinaus, welche in axialer Richtung den ersten Spiralkanal 36 von dem zweiten Spiralkanal 40 trennt, axial verschiebbar. In einer alternativen Ausführungsform kann die Zwischenwandung 90 in radialer Richtung sich über das Turbinenleitgitter 88 hinaus bis zum Außenumfang des Turbinenrads 68 erstrecken. In diesem Fall ist der Varioschieber lediglich zum Absperren des ersten Spiralkanals 36 und entsprechend zum Variieren der Leitschaufelhöhe des Turbinenleitgitters 88 im Bereich des Austritts aus dem ersten Spiralkanal 36 geeignet. Die Leitschaufeln des Turbinenleitgitters 88 wirken als Düsen zum Beschleunigen des aus den Spiralkanälen 40, 36 austretenden Mediums vor dessen Auftreffen auf das Turbinenrad 68.

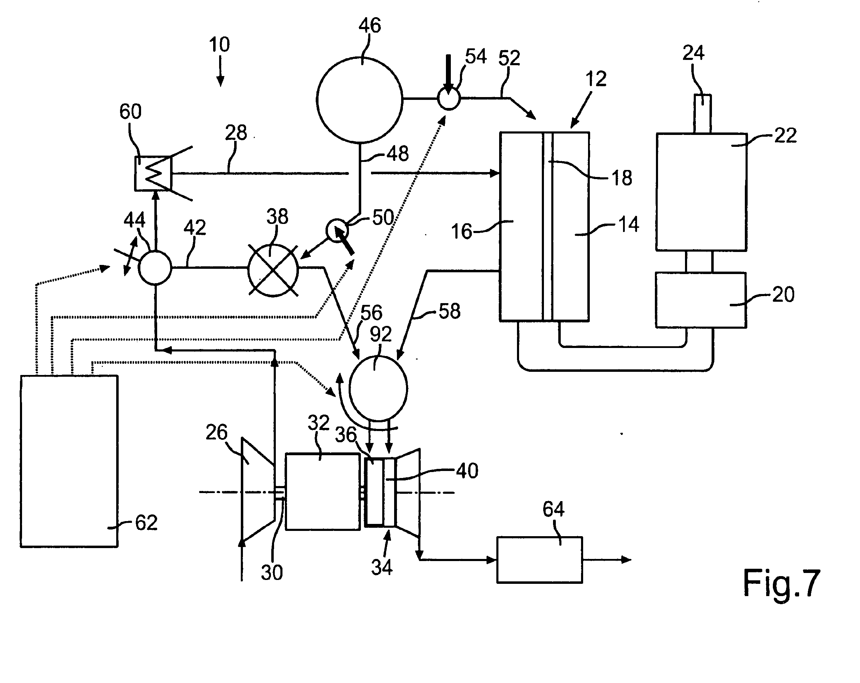

Fig. 7 zeigt eine weitere Ausführungsform der Luftversorgungsrichtung 10, welche im Wesentlichen der Ausführungsform gemäß Fig. 1 entspricht. Entsprechend ist die Turbine 34 als asymmetrische Zwillingsstromturbine mit einer nicht variierbaren Geometrie ausgebildet. Um dennoch ein variables Beaufschlagen des Turbinenrads 68 mit dem Abgas der Brennkammer 38 und/oder mit der Abluft des Brennstoffzellenstapels 12 zu ermöglichen, ist stromaufwärts der Turbine 34 eine Dosiereinrichtung 92 angeordnet. Diese Dosiereinrichtung 92 ermöglicht ein vergleichsweise grobes, jedoch robustes und kostengünstiges Beaufschlagen des Turbinenrads 68 über den ersten Spiralkanal 36 und/oder den zweiten Spiralkanal 40. Die Dosiereinrichtung 92 ermöglicht darüber hinaus ein Dosieren der über die Abzweigleitung 42 der Brennkammer 38 zuströmenden verdichtenden Zuluft. Die Dosiereinrichtung 92 ist bei der Ausführungsform gemäß Fig. 7 ebenso wie die an der Anschlussstelle der Abzweigleitung 42 an die Zuleitung 28 angeordnete Dosiereinrichtung 44 und die Ventile 50, 54 mittels der Regelungseinrichtung 62 regelbar.

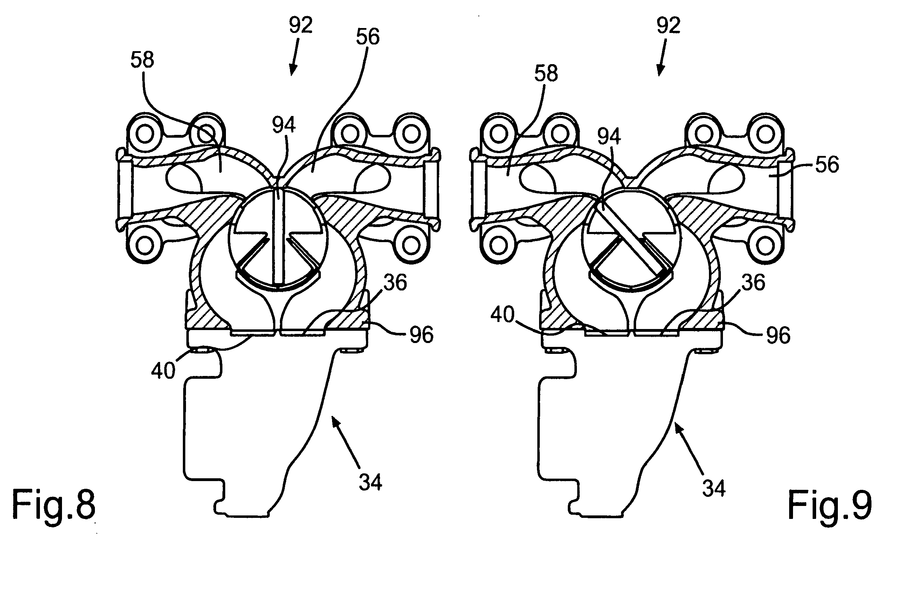

Fig. 8 zeigt die in Fig. 7 schematisch gezeigte Dosiereinrichtung 92 in einer . Schnittansicht. Die Dosiereinrichtung 92 umfasst einen Drehschieber 94, welcher in Fig. 8 in einer Mittelposition gezeigt ist. In dieser Mittelposition wird die über den Abluftstrang 58 dem zweiten Spiralkanal 40 zuführbare Abluft ohne Beimischung von Abgas aus dem Abgasstrang 56 der Turbine 34 zugeführt. In analoger Weise wird in dieser Mittelposition des Drehschiebers 94 das den Abgasstrang 56 durchströmende, von der Brennkammer 38 stammende Abgas dem ersten Spiralkanal 36 der Turbine 34 ohne Beimischung von Abluft des Brennstoffzellenstapels 12 zugeführt. Analog zu der Turbine 34 weist die Dosiereinrichtung 94 einen Zwillingsflansch 96 auf, mittels welchem die Dosiereinrichtung 92 mit der Turbine 34 koppelbar ist.

In der in Fig. 9 gezeigten Position des Drehschiebers 94 werden sowohl die Abluft des Brennstoffzellenstapels 12, welche der Dosiereinrichtung 92 über den Abluftstrang 58 zuströmt und das Abgas der Brennkammer 38, welche der Dosiervorrichtung 92 über den Abgasstrang 56 von der Brennkammer 38 zuströmt, dem ersten Spiralkanal 36 der Zwillingsstromturbine 34 zugeführt. In einer vorliegend nicht gezeigten dritten Stellung des Drehschiebers 92, in welcher dieser im Uhrzeigersinn zum gegenüberliegenden Anschlag bewegt ist, strömt das Abgas der Brennkammer 38 gemeinsam mit der Abluft des Brennstoffzellenstapels 12 ausschließlich dem zweiten Spiralkanal 40 zu. In ebenfalls nicht gezeigten Zwischenstellungen des Drehschiebers 94 strömen Abluft und Abgas vermischt sowohl dem ersten Spiralkanal 36 und dem zweiten Spiralkanal 40 zu. Dadurch ist auf besonders einfache und kostengünstige Art und Weise eine hohe Variabilität beim Beaufschlagen des Turbinenrades 68 der Zwillingsstromturbine 34 ermöglicht.

Wasserstoffmengen, die mit einer Anodenrezikulation in Verbindung zu bringen sind und ungenutzt quasi als Leck-, bzw. Verlustmengen zu deuten sind, können vorteilhafterweise ebenfalls der Brennkammer 38 und Turbine 34 zur positiven Energieverwertung zugeführt werden.

## Patentansprüche

1. Luftversorgungseinrichtung für einen Brennstoffzellenstapel (12), mit einem Verdichter (26) zum Verdichten von dem Brennstoffzellenstapel (12) über eine Zuleitung (28) zuführbarer Zuluft, mit einer Turbine (34, 74, 84), welcher zum Antreiben des Verdichters (26) Abluft des Brennstoffzellenstapels (12) zuführbar ist, und mit einer mit einem Brennstoff beaufschlagbaren Brennkammer (38), wobei die Turbine (34, 74, 84) mit Abgas der Brennkammer (38) beaufschlagbar ist,
**dadurch gekennzeichnet, dass**
die Zuleitung (28) eine Abzweigleitung (42) aufweist, mittels welcher der Brennkammer (38) verdichtete Zuluft zuführbar ist.

2. Luftversorgungseinrichtung nach Anspruch 1,
**dadurch gekennzeichnet, dass**
die Turbine (34, 74, 84) zweiflutig ausgebildet ist, wobei ein erster Spiralkanal (36) mit Abgas der Brennkammer (38) und ein zweiter Spiralkanal (40) mit Abluft des Brennstoffzellenstapels (12) beaufschlagbar ist.

3. Luftversorgungseinrichtung nach Anspruch 2,
**dadurch gekennzeichnet, dass**
ein durchströmbarer Querschnitt des zweiten Spiralkanals (40) größer ist als ein durchströmbarer Querschnitt des ersten Spiralkanals (36).

4. Luftversorgungseinrichtung nach Anspruch 2 oder 3,
**dadurch gekennzeichnet, dass**
der zweite Spiralkanal (40) näher an einem Lager (70) einer ein Turbinenrad (68) der Turbine (34, 74, 84) und ein Verdichterrad des Verdichters (26) tragenden Welle (30) angeordnet ist als der erste Spiralkanal (36).

5. Luftversorgungseinrichtung nach einem der Ansprüche 2 bis 4,
**dadurch gekennzeichnet, dass**
der zweite Spiralkanal (40) näher an einem elektrischen Antriebsaggregat (32) zum Antreiben des Verdichters (26) angeordnet ist als der erste Spiralkanal (36).

6. Luftversorgungseinrichtung nach einem der Ansprüche 1 bis 5,
**dadurch gekennzeichnet, dass**
stromaufwärts des Verdichters (26) ein Niederdruckverdichter (72) angeordnet ist, wobei zum Antreiben des Niederdruckverdichters (72) ein elektrisches Antriebsaggregat (32) vorgesehen ist.

7. Luftversorgungseinrichtung nach einem der Ansprüche 1 bis 6,
**dadurch gekennzeichnet, dass**
stromabwärts des Verdichters (26) ein Hochdruckverdichter (82) angeordnet ist, wobei zum Antreiben des Hochdruckverdichters (82) ein elektrisches Antriebsaggregat (32) vorgesehen ist.

8. Luftversorgungseinrichtung nach Anspruch 7,
**dadurch gekennzeichnet, dass**
die Abzweigleitung (42) stromabwärts des Hochdruckverdichters (82) in der Zuleitung (28) angeordnet ist.

9. Luftversorgungseinrichtung nach einem der Ansprüche 1 bis 8,
**dadurch gekennzeichnet, dass**
an einer Anschlussstelle der Abzweigleitung (42) an die Zuleitung (28) eine Dosiereinrichtung (44) zum Einstellen eines der Brennkammer (38) zuführbaren Zuluftstroms angeordnet ist.

10. Luftversorgungseinrichtung nach einem der Ansprüche 2 bis 9,
**dadurch gekennzeichnet, dass**
die Turbine (84) eine Drosseleinrichtung (86) zum Drosseln und/oder Absperren zumindest des ersten Spiralkanals (36) aufweist.

11. Luftversorgungseinrichtung nach einem der Ansprüche 2 bis 10,
**dadurch gekennzeichnet, dass**
stromaufwärts der Turbine (34) eine Dosiereinrichtung (92) angeordnet ist, mittels welcher das Abgas der Brennkammer (38) gemeinsam mit der Abluft des Brennstoffzellenstapels (12) dem ersten Spiralkanal (36) und/oder dem zweiten Spiralkanal (40) zuführbar ist.

12. Luftversorgungseinrichtung nach einem der Ansprüche 2 bis 11,
**dadurch gekennzeichnet, dass**
die Turbine (34, 74, 84) als, insbesondere variable, Zwillingsstromturbine (34, 84) oder Segmentturbine (74) ausgebildet ist.

13. Luftversorgungseinrichtung nach einem der Ansprüche 1 bis 12,
**dadurch gekennzeichnet, dass**
zum Bevorraten von Brennstoff für die Brennkammer (38) und den Brennstoffzellenstapel (12) ein gemeinsames Vorratsbehältnis (46) vorgesehen ist.

14. Luftversorgungseinrichtung nach einem der Ansprüche 1 bis 13,
**dadurch gekennzeichnet, dass**
stromabwärts der Turbine (34, 74, 84) eine Abgasnachbehandlungseinrichtung (64) angeordnet ist.

15. Brennstoffzellensystem mit einer Luftversorgungseinrichtung (10) zum Zuführen von Zuluft zu einem Brennstoffzellenstapel (12),
**dadurch gekennzeichnet, dass**
die Luftversorgungseinrichtung (10) nach einem der Ansprüche 1 bis 14 ausgebildet ist.

16. Verfahren zum Betreiben einer Luftversorgungseinrichtung (10) für einen Brennstoffzellenstapel (12), bei welchem ein Verdichter (26) dem Brennstoffzellenstapel (12) über eine Zuleitung (28) zugeführte Zuluft verdichtet, bei welchem einer den Verdichter (26) antreibenden Turbine (34, 74, 84) Abluft des Brennstoffzellenstapels (12) zugeführt wird, und bei welchem eine Brennkammer (38) mit einem Brennstoff beaufschlagt wird, wobei die Turbine (34, 74, 84) mit Abgas der Brennkammer (38) beaufschlagt wird,
**dadurch gekennzeichnet, dass**
der Brennkammer (38) verdichtete Zuluft zugeführt wird, welche über eine Abzweigleitung (42) von der Zuleitung (28) abgezweigt wird.

17. Verfahren nach Anspruch 16,
**dadurch gekennzeichnet, dass**
das Verfahren mittels einer Luftversorgungseinrichtung (10) nach einem der Ansprüche 1 bis 14 durchgeführt wird.

## Claims

1. Air supply unit for a fuel cell stack (12), comprising a compressor (26) for compressing intake air which can be supplied to the fuel cell stack (12) via a supply line (28), a turbine (34, 74, 84) to which exhaust air of the fuel cell stack (12) can be fed to drive the compressor (26), and a combustion chamber (38) to which a fuel can be admitted, wherein exhaust gas of the combustion chamber (38) can be admitted to the turbine (34, 74, 84),
**characterised in that**
the supply line (28) has a branch line (42) by means of which compressed intake air can be fed to the combustion chamber (38).

2. Air supply unit according to claim 1,
**characterised in that**
the turbine (34, 74, 84) is a double-flow turbine, wherein exhaust gas of the combustion chamber (38) can be admitted to a first spiral passage (36) and exhaust air of the fuel cell stack (12) can be admitted to a second spiral passage (40).

3. Air supply unit according to claim 2,
**characterised in that**
a flow-through cross-section of the second spiral passage (40) is larger than a flow-through cross-section of the first spiral passage (36).

4. Air supply unit according to claim 2 or 3,
**characterised in that**
the second spiral passage (40) is located closer to a bearing (70) of a shaft (30) supporting a turbine wheel (68) of the turbine (34, 74, 84) and a compressor impeller of the compressor (26) than the first spiral passage (36).

5. Air supply unit according to any of claims 2 to 4,
**characterised in that**
the second spiral passage (40) is located closer to an electric drive unit (32) for driving the compressor (26) than the first spiral passage (36).

6. Air supply unit according to any of claims 1 to 5,
**characterised in that**
upstream of the compressor (26), a low-pressure compressor (72) is provided, an electric drive unit (32) being provided for driving the low-pressure compressor (72).

7. Air supply unit according to any of claims 1 to 6,
**characterised in that**
downstream of the compressor (26), a high-pressure compressor (82) is provided, an electric drive unit (32) being provided for driving the high-pressure compressor (82).

8. Air supply unit according to claim 7,
**characterised in that**
the branch line (42) is located downstream of the high-pressure compressor (82) in the supply line (28).

9. Air supply unit according to any of claims 1 to 8,
**characterised in that**
a metering device (44) for adjusting an intake air flow to be fed to the combustion chamber (38) is provided at a connecting point between the branch line (42) and the supply line (28).

10. Air supply unit according to any of claims 2 to 9,
**characterised in that**
the turbine (84) comprises a restrictor device (86) for restricting and/or blocking off at least the first spiral passage (36).

11. Air supply unit according to any of claims 2 to 10,
**characterised in that**
upstream of the turbine (34), a metering device (92) is provided, by means of which the exhaust gas of the combustion chamber (38) together with the exhaust air of the fuel cell stack (12) can be fed to the first spiral passage (36) and/or to the second spiral passage (40).

12. Air supply unit according to any of claims 2 to 11,
**characterised in that**
the turbine (34, 74, 84) is designed as an in particular variable twin-flow turbine (34, 84) or segmented turbine (74).

13. Air supply unit according to any of claims 1 to 12,
**characterised in that**
a common reservoir (46) is provided for storing fuel for the combustion chamber (38) and the fuel cell stack (12).

14. Air supply unit according to any of claims 1 to 13,
**characterised in that**
downstream of the turbine (34, 74, 84), an exhaust gas treatment unit (64) is provided.

15. Fuel cell system comprising an air supply unit (10) for supplying intake air to a fuel cell stack (12),
**characterised in that**
the air supply unit is designed according to any of claims 1 to 14.

16. Method for operating an air supply unit (10) for a fuel cell stack (12),
wherein a compressor (26) compresses intake air fed to the fuel cell stack (12) via a supply line (28), wherein exhaust air of the fuel cell stack (12) is fed to a turbine (34, 74, 84) driving the compressor (26), and wherein a fuel is admitted to a combustion chamber (38) and exhaust gas of the combustion chamber (38) is admitted to the turbine (34, 74, 84), **characterised in that**
compressed intake air which is branched off the supply line (28) via a branch line (42) is fed to the combustion chamber (38).

17. Method according to claim 15,
**characterised in that**
the method is implemented by means of an air supply unit (10) according to any of claims 1 to 14.

## Revendications

1. Dispositif d'alimentation en air destiné à un empilement de piles à combustible (12) et comportant un compresseur (26) servant à compresser l'air amené à l'empilement de piles à combustible (12) par une conduite d'amenée (28), une turbine (34, 74, 84), à laquelle peut être amené l'air sortant de l'empilement de piles à combustible (12) pour l'entraînement du compresseur (26), et une chambre de combustion (38) pouvant être alimentée en combustible, la turbine (34, 74, 84) étant alimentée en gaz d'échappement provenant de la chambre de combustion (38), **caractérisé en ce que** la conduite d'amenée (28) présente une conduite de dérivation (42), au moyen de laquelle l'air compressé peut être amené à la chambre de combustion (38).

2. Dispositif d'alimentation en air selon la revendication 1, **caractérisé en ce que** la turbine (34, 74, 84) est à double flux, un premier canal en spirale (36) pouvant être alimenté en gaz d'échappement provenant de la chambre à combustion (38) et un second canal en spirale (40) pouvant être alimenté en gaz d'échappement provenant de l'empilement de piles à combustible (12).

3. Dispositif d'alimentation en air selon la revendication 2, **caractérisé en ce qu'**une section d'écoulement du second canal en spirale (40) est plus grande qu'une section d'écoulement du premier canal en spirale (36).

4. Dispositif d'alimentation en air selon la revendication 2 à 3, **caractérisé en ce que** le second canal en spirale (40) est disposé plus près sur un palier (70) d'un arbre portant une roue (68) de la turbine (34, 74, 84) et une roue du compresseur (26) que le premier canal en spirale (36).

5. Dispositif d'alimentation en air selon l'une quelconque des revendications 2 à 4, **caractérisé en ce que** le second canal en spirale (40) est disposé plus près sur un groupe d'entraînement électrique (32) servant à l'entraînement du compresseur (26) que le premier canal en spirale (36).

6. Dispositif d'alimentation en air selon l'une quelconque des revendications 1 à 5, **caractérisé en ce qu'**en amont du compresseur (26) est disposé un compresseur basse pression (72), un groupe d'entraînement électrique (32) destiné à l'entraînement du compresseur basse pression (72) étant prévu.

7. Dispositif d'alimentation en air selon l'une quelconque des revendications 1 à 6, **caractérisé en ce qu'**en aval du compresseur (26) est disposé un compresseur haute pression (82), un groupe d'entraînement électrique (32) destiné à l'entraînement du compresseur haute pression (82) étant prévu.

8. Dispositif d'alimentation en air selon la revendication 7, **caractérisé en ce que** la conduite de dérivation (42) en aval du compresseur haute pression (82) est disposée dans la conduite d'amenée (28).

9. Dispositif d'alimentation en air selon l'une quelconque des revendications 1 à 8, **caractérisé en ce qu'**à un point de raccordement de la conduite de dérivation (42) sur la conduite d'amenée (28) est disposé un dispositif de dosage (44) destiné au réglage d'un flux d'air amené à la chambre de combustion (38).

10. Dispositif d'alimentation en air selon l'une quelconque des revendications 2 à 9, **caractérisé en ce que** la turbine (84) présente un dispositif d'étranglement (86) pour obturer et / ou fermer au moins le premier canal en spirale (36).

11. Dispositif d'alimentation en air selon l'une quelconque des revendications 2 à 10, **caractérisé en ce qu'**en amont de la turbine (34) est disposé un dispositif de dosage (92), au moyen duquel le gaz d'échappement provenant de la chambre de combustion (38) conjointement avec l'air sortant de l'empilement de piles à combustible (12) peut être amené au premier canal en spirale (36) et / ou au second canal en spirale (40).

12. Dispositif d'alimentation en air selon l'une quelconque des revendications 2 à 11, **caractérisé en ce que** la turbine (34, 74, 84) est conçue comme, en particulier, une turbine à double flux (34, 84) ou une turbine à segment (74).

13. Dispositif d'alimentation en air selon l'une quelconque des revendications 1 à 12, **caractérisé en ce que** pour le stockage de combustible pour la chambre de combustion (38) et l'empilement de piles à combustible (12) est prévu un réservoir de stockage commun (46).

14. Dispositif d'alimentation en air selon l'une quelconque des revendications 1 à 13, **caractérisé en ce qu'**en aval de la turbine (34, 74, 84) est disposée un dispositif de post-traitement des gaz d'échappement (64).

15. Système de piles à combustible doté d'un dispositif d'alimentation en air (10) pour alimenter en air un empilement de piles à combustible (12), **caractérisé en ce que** le dispositif d'alimentation en air (10) est conçu selon l'une quelconque des revendications 1 à 14.

16. Procédé pour faire fonctionner un dispositif d'alimentation en air (10) pour un empilement de piles à combustible (12), selon lequel un compresseur (26) compresse l'air amené par une conduite (28) à l'empilement de piles à combustible (12), selon lequel de l'air sortant de l'empilement de piles à combustible (12) est amené à une turbine (34, 74, 84) entraînant le compresseur (26), et selon lequel une chambre de combustion (38) étant alimentée en combustible, la turbine (34, 74, 84) étant alimentée en gaz d'échappement provenant de la chambre de combustion (38), **caractérisé en ce que** de l'air entrant comprimé est amené à la chambre de combustion (38), lequel est dévié par une conduite de dérivation (42) de la conduite d'amenée (28).

17. Procédé selon la revendication 16, **caractérisé en ce que** le procédé s'applique au moyen d'un dispositif d'alimentation en air (10) selon l'une quelconque des revendications 1 à 14.
